# EUROPEAN PATENT SPECIFICATION

(11) **EP 0 801 359 B1**
(45) Date of publication and mention of the grant of the patent: **05.01.2000**
(21) Application number: 97106011.6
(22) Date of filing: 11.04.1997
(51) Int. Cl.: G06T 3/40, H04N 1/393

(54) **Automatic picture size magnification/reduction circuit**
Automatische Bildvergrösserungs -verkleinerungsschaltung
Circuit d'agrandissement ou de réduction automatique d'image

(30) Priority: 12.04.1996 JP 11567696
(43) Date of publication of application: 15.10.1997
(73) Proprietor: NEC CORPORATION, Tokyo (JP)
(72) Inventor: Matsuo, Hiroshi, Minato-ku, Tokyo (JP)
(74) Representative: Betten & Resch

(56) References cited:
- US-A- 4 876 604
- PATENT ABSTRACTS OF JAPAN vol. 013, no. 197 (P-868), 11 May 1989 & JP 01 019471 A (NEC CORP), 23 January 1989,
- PATENT ABSTRACTS OF JAPAN vol. 016, no. 564 (E-1295), 4 December 1992 & JP 04 215376 A (MURATA MACH LTD), 6 August 1992,
- PATENT ABSTRACTS OF JAPAN vol. 014, no. 394 (E-0969), 24 August 1990 & JP 02 146868 A (NEC CORP), 6 June 1990,
- PROCEEDINGS OF THE SPIE, vol. 2589, 23 October 1995, pages 50-57, XP000613542 SEALES W B ET AL: "ACTIVE CAMERA CONTROL FROM COMPRESSED IMAGE STREAMS"
- REAL-TIME IMAGING, vol. 2, no. 1, February 1996, pages 3-17, XP000610641 SMITH B C ET AL: "COMPRESSED DOMAIN PROCESSING OF JPEG-ENCODED IMAGES"

## Description

The present invention relates to an automatic picture size magnification/reduction circuit, and more particularly, to that to be preferably applied for picture size magnification or reduction in a digital image processor.

JP-A-1 019 471 discloses an image information processor which reduces automatically image information and executes a display, in case a size of the retrieved image information is larger than a size of a display device and cannot be included entirely on one picture plane. In case a size of some image information which has been retrieved by a retrieving means is larger than a display size of a display device, a reduction rate calculating means calculates a reduction rate by which its image information can be held in the display size. Subsequently, a reducing means executes a reduction of the image information in accordance with its reduction rate, and a display control means displays this reduced image information on the display device.

JP-A-4 215 376 shows a facsimile device which prevents black printing on recording paper and shortens the time for transmission by automatically magnifying or reducing image signals so as to confine image information to a recording paper size, then transmitting this information. The document paper size is read in a document size reading section and the read image signals are magnified or reduced in a magnifying/reducing section. The detected document size and the recording paper size of the transmission destination or the recording paper size of the present station are compared in a signal processing section at the time of transmission or copying. The image signals are transmitted as they are via a modem if the document size and the received recording paper size are the same. The magnification/reduction rate is calculated in the processing section and is transmitted to the magnifying/reducing section when the document size and the recording paper size are different. The image signals are then transmitted after the signals are subjected to magnification/reduction.

As an example of heretofore known digital image processors provided with means for representing an output image scaled by magnification or reduction in horizontal and vertical direction, there is a facsimile terminal proposed in a Japanese patent application JP-A-4 223 769, published 13.8.1992, of which a schematic block diagram is illustrated in FIG. 4.

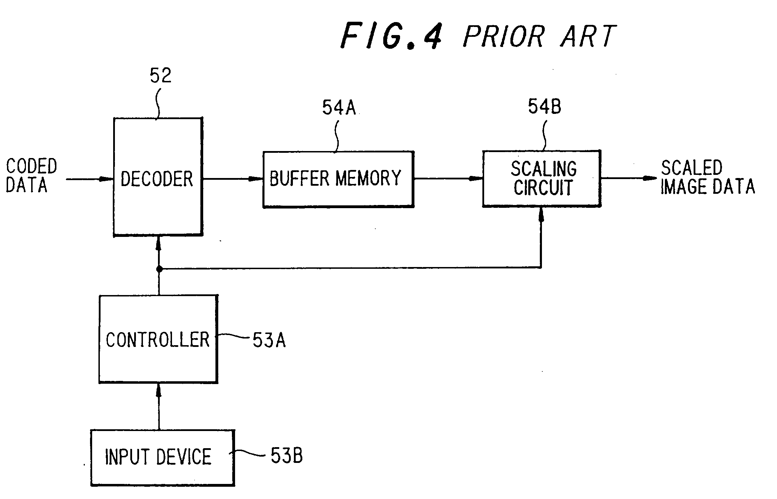

For obtaining output images scaled according to user's option, the prior art of FIG. 4 comprises;
a decoder 52 for decoding coded picture data stored in a memory, for example, into binary image data,
a buffer memory 54A for temporarily storing the binary image data,
a scaling circuit 54B for outputting scaled image data by magnifying or reducing the binary image data stored in the buffer memory 54A,
a controller 53A for controlling the decoder 52 and the scaling circuit 54B, and
an input device 53B for a user entering a scaling factor into the controller 53A.

For obtaining scaled image data, the user indicates a scaling factor to the controller 53A through the input device 53B. The controller 53A controls the decoder 52 to output the binary image data decoded from the coded picture data to the buffer memory 54A, which are read out and processed in order by the scaling circuit 54B for magnifying or reducing picture size thereof according to the scaling factor indicated from the controller 53A.

Thus, scaled image data according to a user's option are obtained in the prior art of FIG. 4.

However, there is needed an input device for entering the scaling factor, which makes difficult miniaturization of the digital image processor. Furthermore, when applied in a portable video device having but a relatively small display, for example, there is a problem of usability that a user must input an appropriate scaling factor manually after beginning of video programs, even though most of video programs are to be reproduced in the same reduced scale for displaying a whole picture in the small screen.

Therefore, a primary object of the invention is to provide an automatic picture size magnification/reduction circuit to be applied in a digital image processor which can represent picture data automatically with a most appropriate scaling factor according to display size of its output device by detecting picture size information encoded in the picture data to be displayed, enabling to eliminate the input device therefrom needed for manually entering the scaling factor and making easy miniaturization thereof.

This object is achieved by the subject matter of claim 1.

An automatic picture size magnification/reduction circuit of the invention to be applied in a digital image processor comprises means for determining a scaling factor according to picture size information obtained from coded data to be reproduced by the digital image processor and means for processing image data obtained by decoding the coded data into scaled data to be displayed with a scaled size according to the scaling factor.

Therefore, by making use of the picture size information, such as HS (Horizontal Size indicating lateral pixel number) code following SHC (Sequential Header Code) of picture data coded according to the MPEG (Moving Picture Experts Group) 1, for example, a most appropriate scaling factor can be determined automatically in the invention without input device for manually entering the scaling factor, making easy miniaturization of the digital image processor.

The foregoing, further objects, features, and advantages of this invention will become apparent from a consideration of the following description, the appended claims, and the accompanying drawings wherein the same numerals indicate the same or the corresponding parts.
FIG. 1 is a block diagram illustrating an automatic picture size magnification/reduction circuit according to an embodiment of the invention;
FIG. 2 is a block diagram illustrating an example of a circuit configuration of the detector 3 of FIG. 1;
FIG. 3 is a flowchart illustrating an example of a control sequence performed in a microprocessor as another embodiment of the detector 3; and
FIG. 4 is a block diagram illustrating a prior art.

Now, embodiments of the present invention will be described in connection with the drawings.

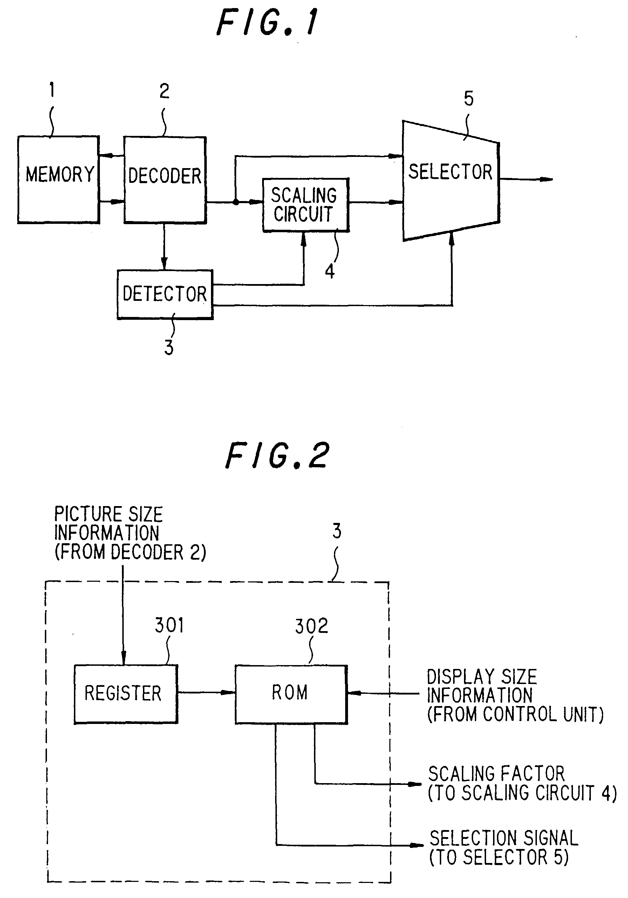

FIG. 1 is a block diagram illustrating an automatic picture size magnification/reduction circuit according to an embodiment of the invention, comprising;
a memory 1 for storing coded picture data,
a decoder 2 for reading out the coded picture data in the memory 1 by controlling the memory 1 with reading addresses, and decoding them into decoded image data,
a detector 3 for indicating a scaling factor and generating a selection signal according to picture size information detected in the coded picture data read out by the decoder 2,
a scaling circuit 4 for processing the image data decoded by the decoder 2 for magnifying or reducing picture size according to the scaling factor indicated by the detector 3, and
a selector 5 for selecting either of the image data decoded by the decoder 2 or the scaled image data processed by the scaling circuit 4 according to the selection signal delivered from the detector 3.

As for the decoder 2, there can be applied an appropriate LSI (Large Scale Integrated circuit) chip on the market provided for decoding MPEG audio/video signals.

In the memory 1, there are stored coded picture data encoded according to a standard format, such as the MPEG (Moving Picture Experts Group) 1 system or the MPEG 2 system, wherein picture size information is included in their header information. According to the MPEG 1 system, for example, a SHC (Sequence Header Code) of its sequence layer is followed by picture format information such as HS (Horizontal Size: lateral pixel number of the picture to be displayed), or VS (Vertical Size: number of scanning lines of the picture), and also in the sequence layer of the MPEG 2 system, the SHC is followed by picture format information of HSV (Horizontal Size Value), VSV (Vertical Size Value) and so on.

When coded picture data is reproduced, the decoder 2 is controlled by a control unit (not shown in FIG. 1) and delivers reading addresses to the memory 1 for reading out coded picture data of the program, of which the picture format information is delivered to the detector 3 and picture data are decoded according to their coding system into image data to be displayed.

Therefore, the detector 3 can determine an appropriate scaling factor to be applied for the coded picture data at the beginning thereof, from the picture format information referring to pixel size of the display device where the picture is output.

When the picture format information, the HS or the HSV for example, indicates horizontal size of 176 pixels and that of the display device is 352 pixels, the detector 3 calculates the scaling factor as 2 = 352/176, which is delivered to the scaling circuit 4.

The scaling circuit 4, having a line memory and a control circuit, for example, generates data of magnified or reduced images as follows. When the scaling factor is '2', for instance, data of an address of the line memory, which is written with data of a line of the image data input from the decoder 2, are read out two times repeatedly for outputting data of a horizontally magnified line, and data of the same line of the input image data are read out two times repeatedly for outputting data of two lines of vertically magnified image to be displayed. When the scaling factor is 1/2 on the contrary, data of every second address of the line memory are read out for outputting a horizontally reduced image data and only data of every second line of the input image data are read out for outputting data of a line of vertically reduced image to be displayed.

The output of the scaling circuit 4 is selected by the selector 5 to be displayed, according to the selection signal generated by the detector 3 when the scaling factor is not '1'. When the scaling factor is '1', that is, when the decoded image data is not necessary to be magnified or reduced, the scaling circuit 4 may be controlled to output the same data supplied from the decoder 2. However, in the embodiment, the scaling circuit 4 is disabled in order to economize power consumption and the selector 5 is changed over to select the output of the decoder 2 directly to be displayed, controlled by the detector 3 when the scaling factor is '1'.

FIG. 2 is a block diagram illustrating an example of a circuit configuration of the detector 3 of the embodiment of FIG. 1, comprising a register 301 for storing picture size information delivered from the decoder 2 and a ROM 302 constituting a scaling factor table. Being accessed with a column address corresponding to picture size, the HS or the HSV for example, stored in the register 301 and a line address corresponding to the size information of the display device supplied from the control unit, the ROM 302 outputs an appropriate value for the scaling factor and the selection signal prepared therein to be delivered to the scaling circuit 4 and the selector 5, respectively.

The detector 3 of FIG. 2 may be preferably embodied with a FPGA (Field Programmable Gate Array) for simplifying the circuit configuration.

The detector 3 may be embodied with a program in a microprocessor provided in the control unit, for example.

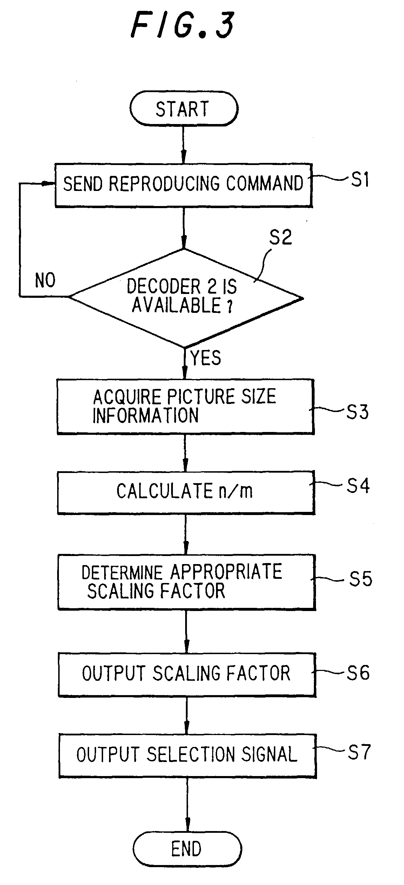

FIG. 3 is a flowchart illustrating an example of a control sequence performed in the microprocessor.

Referring to FIG. 3, a reproducing command of coded picture data is sent to the decoder 2 until the decoder 2 becomes available (at steps S1 and S2). At the beginning of the coded picture data, the picture size information in the sequence header of the coded picture data is read out and a lateral pixel number *n*, for example, of the program is acquired (at step S3). Referring to lateral pixel number *m* of the display device, an appropriate scaling factor corresponding to the value *n*/*m* is calculated (at steps S4 and S5) and output together with corresponding selection signal (at steps S6 and S7).

Thus, coded picture data can be represented automatically with a most appropriate scaling factor, in the embodiment, according to display size of the output device by detecting picture size information encoded in the picture data to be displayed, enabling to eliminate the input device needed for manually entering the scaling factor and making easy miniaturization of the apparatus.

Heretofore, the present invention is described in connection with the embodiment of FIG. 1. However there can be considered various applications of the invention as claimed. For example, two different scaling factors may be applied for horizontal and vertical magnification/reduction, respectively.

## Claims

1. An automatic picture size magnification/reduction circuit to be applied in a digital image processor; comprising:
a memory (1) for storing coded picture data;
a decoder (2) for decoding said coded picture data;
a detector (3) for determining a scaling factor from the coded input data in combination with information of an output display size and generating a selection signal according to picture size information encoded in said coded picture data;
means (4) for processing image data decoded from said coded picture data by said decoder (2) into scaled data to be displayed with a scaled size according to said scaling factor;
characterized in that it further comprises
a selector (5) for selecting and outputting one of said image data and said scaled data according to said selection signal, and
in that said means (4) for processing image data are disabled when said image data is selected to be output by said selector (5).

## Patentansprüche

1. Automatische Bildvergrößerungs-/-verkleinerungsschaltung zur Anwendung in einem digitalen Bildprozessor, mit:
einem Speicher (1) zum Speichern codierter Bilddaten;
einem Decoder (2) zum Decodieren der codierten Bilddaten;
einem Detektor (3) zum Ermitteln eines Skalierungsfaktors aus den codierten Eingabedaten in Kombination mit Informationen einer Ausgabe-Anzeigegröße, und zum Erzeugen eines Auswahlsignals gemäß der Bildgröße-Information, die in den codierten Bilddaten codiert ist;
einer Einrichtung (4) zum Verarbeiten von Bilddaten, die vom Decoder (2) aus den codierten Bilddaten decodiert wurden, in skalierte Daten zur Anzeige in einer skalierten Größe gemäß dem Skalierungsfaktor;
dadurch gekennzeichnet, daß sie weiterhin folgendes aufweist:
eine Auswahleinrichtung (5) zum Auswählen und Ausgeben eines der Bilddaten und der skalierten Daten gemäß dem Auswahlsignal, und dadurch, daß
die Einrichtung (4) zum Verarbeiten von Bilddaten gesperrt wird, wenn die Bilddaten von der Auswahleinrichtung (5) zur Ausgabe ausgewählt werden.

## Revendications

1. Circuit de grossissement/réduction automatique de la dimension d'une image à appliquer dans un processeur d'images numérique, comportant :
une mémoire (1) pour mémoriser des données d'image codées,
un décodeur (2) pour décoder lesdites données d'image codées,
un détecteur (3) pour déterminer un facteur de mise à l'échelle à partir des données d'entrée codées en combinaison avec des informations de dimension d'affichage de sortie et générer un signal de sélection conformément aux informations de dimension d'image codée sous la forme desdites données d'image codées,
des moyens (4) pour traiter des données d'image décodées à partir desdites données d'image codées par ledit décodeur (2) en données mises à l'échelle à afficher selon une dimension mise à l'échelle conformément audit facteur de mise à l'échelle, caractérisé en ce qu'il comporte de plus
un sélecteur (5) pour sélectionner et émettre des données parmi lesdites données d'image et lesdites données mises à l'échelle conformément audit signal de sélection, et
en ce que lesdits moyens (4) pour traiter des données d'image sont désactivés lorsque lesdites données d'image sont sélectionnées pour être émises par ledit sélecteur (5).
